# EUROPÄISCHE PATENTANMELDUNG

(11) **EP 3 771 515 A1**
(43) Veröffentlichungstag der Anmeldung: **03.02.2021**
(21) Anmeldenummer: 19189617.4
(22) Anmeldetag: 01.08.2019
(51) Int. Cl.: B23K 9/095, B23K 31/12, B23K 9/09

(54) **PROZESSENERGIEQUELLE UND VERFAHREN ZUR BEREITSTELLUNG ZUMINDEST EINES SICH MIT EINER PERIODE PERIODISCH ÄNDERNDEN PROZESSPARAMETERS**

(71) Anmelder: FRONIUS INTERNATIONAL GmbH, 4643 Pettenbach (AT)
(72) Erfinder: ENNSBRUNNER, Helmut, 4643 Pettenbach (AT); REINTHALER, Günther, 4643 Pettenbach (AT)
(74) Vertreter: Sonn & Partner Patentanwälte

(57) **Zusammenfassung**

Die Erfindung betrifft eine Prozessenergiequelle (1) zur Bereitstellung zumindest eines sich mit einer Periode (T) periodisch ändernden Prozessparameters (Pᵢ(t)), mit einem Prozessregler (2) zur Festlegung der Periode (T) des zumindest einen Prozessparameters (Pᵢ(t)), einem Leistungsteil (3) und zumindest einem Anschluss (4) zur Verbindung mit zumindest einem Sensor (5) zur Erfassung von Prozessgrößen (Gⱼ(t)) und bzw. oder zumindest einem Prozessaktor (6) zur Beeinflussung von Prozessparametern (Pᵢ(t)), wobei der zumindest eine Sensor (5) und bzw. oder der zumindest eine Prozessaktor (6) durch den sich periodisch ändernden Prozessparameter (Pᵢ(t)) nach zumindest einer vorgegebenen Triggerbedingung (Bₗ) triggerbar ist, und ein Verfahren, bei dem zumindest ein Prozessparameter (Pᵢ(t)) periodisch geändert wird. Erfindungsgemäß ist eine Benutzerschnittstelle (7) vorgesehen, über welche die zumindest eine Triggerbedingung (Bₗ) für die Triggerung des zumindest einen Sensors (5) und bzw. oder des zumindest einen Prozessaktors (6) festlegbar und über den zumindest einen Anschluss (4) an den zumindest einen Sensor (5) und bzw. oder den zumindest einen Prozessaktor (6) zumindest ein Triggersignal (Trig) übertragbar ist.

## Beschreibung

Die Erfindung betrifft eine Prozessenergiequelle zur Bereitstellung zumindest eines sich mit einer Periode periodisch ändernden Prozessparameters, mit einem Prozessregler zur Festlegung der Periode des zumindest einen Prozessparameters, einem Leistungsteil und zumindest einem Anschluss zur Verbindung mit zumindest einem Sensor zur Erfassung von Prozessgrößen und bzw. oder zumindest einem Prozessaktor zur Beeinflussung von Prozessparametern, wobei der zumindest eine Sensor und bzw. oder der zumindest eine Prozessaktor durch den sich periodisch ändernden Prozessparameter nach zumindest einer vorgegebenen Triggerbedingung triggerbar ist.

Weiters betrifft die Erfindung ein Verfahren, bei dem in einer Prozessenergiequelle zumindest ein Prozessparameter mit einer Periode periodisch geändert wird, wobei mit einem Prozessregler die Periode des zumindest einen Prozessparameters festgelegt wird, und von einem Leistungsteil der zumindest eine Prozessparameter erzeugt wird, und über zumindest einen Anschluss zumindest ein Sensor zur Erfassung von Prozessgrößen und bzw. oder zumindest ein Prozessaktor zum Beeinflussen von Prozessparametern verbunden wird, wobei der zumindest eine Sensor und bzw. oder der zumindest eine Prozessaktor durch den zumindest einen sich periodisch ändernden Prozessparameter nach zumindest einer vorgegebenen Triggerbedingung getriggert wird.

Insbesondere bezieht sich die vorliegende Erfindung auf eine Schweißstromquelle und ein Schweißverfahren zur Bereitstellung eines sich mit einer Periode periodisch ändernden Schweißstromes als Prozessparameter. Weitere Prozessparameter, wie zum Beispiel die Schweißspannung, die Schweißleistung, etc. werden ebenfalls durch die Prozessenergiequelle vorgegeben oder ergeben sich durch den jeweiligen Prozess. Die Periode der sich periodisch ändernden Prozessparameter muss nicht konstant sein, sondern kann sich im Zuge des Prozesses auch ändern. Dies ist insbesondere bei einem realen Schweißprozess in der Praxis der Fall. Bei einem kurzschlussbehafteten Schweißprozess wird beispielsweise die aus einer Kurzschlussphase und einer Lichtbogenphase bestehende Periode des Schweißprozesses durch entsprechende Regelungen der Schweißparameter immer eine gewisse Schwankung haben. Beim jeweiligen Prozess können verschieden viele Prozessparameter auftreten. Bei den durch die Prozessaktoren beeinflussbaren Prozessparametern handelt es sich um einen oder mehrere der sich periodisch ändernden Prozessparametern des jeweiligen Prozesses.

Unter den Begriff Prozessgröße fallen verschiedenste physikalische Größen, die vom Prozess abhängig sind oder vom Prozess beeinflusst werden. Beispielsweise kann bei einem Schweißprozess die Geometrie oder Breite der Schweißnaht als Prozessgröße von einem optischen Sensor oder beispielsweise die Temperatur der Schweißnaht als eine weitere Prozessgröße durch einen thermischen Sensor erfasst werden.

Darüber hinaus sind aber auch andere Prozessenergiequellen und Verfahren, bei denen zumindest ein anderer sich mit einer Periode periodisch ändernder Prozessparameter auftritt, wie zum Beispiel eine sich periodisch ändernde Spannung, eine sich periodisch ändernde Bewegung, ein sich periodisch ändernder Drahtvorschub etc., möglich. Je nach Anwendung werden die Prozessparameter durch den Prozessregler verschiedenartig geregelt. Der tatsächliche zeitliche Verlauf der Prozessparameter ist wieder vom aktuellen Prozessvorgang abhängig und weicht meist in unvorhersehbarer Weise vom Sollverlauf ab.

Bei derartigen sich periodisch ändernden Prozessparametern ist häufig eine Triggerung von Sensoren und bzw. oder Prozessaktoren auf bestimmte Ereignisse während jeder Periode für bestimmte Aufgaben notwendig oder erwünscht. Üblicherweise gibt es für bestimmte Sensoren oder Prozessaktoren vorgegebene Triggerbedingungen, welche nicht oder nur sehr eingeschränkt beeinflusst oder verändert werden können. Der tatsächliche Verlauf oder der Istverlauf des zumindest einen sich periodisch verändernden Prozessparameters hat wiederum auf die Triggerung der Sensoren und bzw. oder Prozessaktoren Einfluss.

Beispielsweise sind in der Schweißtechnik Kameras oder Schweißschirme bekannt, welche über den sich periodisch ändernden Schweißstrom der Schweißstromquelle getriggert werden, indem die Bildaufnahme der Kamera oder der Verschluss der Blendkassette durch eine Triggerbedingung am Schweißstrom gestartet wird.

Die EP 2 475 489 B1 beschreibt ein Überwachungsmodul zur Überwachung eines Lichtbogenprozesses, mit einer Kamera und einer Lichtquelle, welche synchron zum beobachteten Lichtbogenprozess angesteuert wird.

Herkömmliche Prozessenergiequellen weisen meist nur bestimmte Anschlüsse für bestimmte Sensoren und bzw. oder Prozessaktoren auf, welche nach vorgegebenen Triggerbedingungen synchron zu einem sich periodisch ändernden Prozessparameter gesteuert werden können. Eine Einflussnahme auf die Triggerbedingungen ist meist nicht oder nur mit großem Aufwand möglich. Bei einer Änderung eines Prozessparameters kann die Triggerbedingung ebenfalls nicht verändert werden.

Der vorliegenden Erfindung liegt die Aufgabe zugrunde, eine oben genannte Prozessenergiequelle und ein oben genanntes Verfahren zu schaffen, wobei die Triggerbedingungen für anzuschließende Sensoren und bzw. oder Prozessaktoren besonders flexibel festgelegt und verändert werden können, um für verschiedenste Sensoren und bzw. oder Prozessaktoren optimale Triggerbedingungen für die jeweils gewählten Prozessparameter vorgeben zu können. Die zu triggernden Sensoren und bzw. oder Prozessaktoren sollen dadurch mit möglichst geringen Störungen in Abhängigkeit des jeweiligen sich periodisch ändernden Prozessparameters angesteuert werden können. Nachteile bekannter Vorrichtungen oder Verfahren sollen vermieden oder zumindest reduziert werden.

Gelöst wird die erfindungsgemäße Aufgabe durch eine oben genannte Prozessenergiequelle, bei der eine Benutzerschnittstelle vorgesehen ist, über welche die zumindest eine Triggerbedingung für die Triggerung des zumindest einen Sensors und bzw. oder des zumindest einen Prozessaktors festlegbar und über den zumindest einen Anschluss an den zumindest einen Sensor und bzw. oder den zumindest einen Prozessaktor zumindest ein Triggersignal übertragbar ist. Erfindungsgemäß ist also eine Benutzerschnittstelle an oder in Verbindung mit der Prozessenergiequelle vorgesehen, über die für verschiedene Sensoren und bzw. oder Prozessaktoren, welche an die Prozessenergiequelle angeschlossen werden können, die Triggerbedingungen besonders flexibel festgelegt werden können. Die festgelegte Triggerbedingung bzw. ein entsprechendes Triggersignal wird dann beispielsweise über einen Anschluss, an welchen der Sensor und bzw. oder Prozessaktor angeschlossen werden kann, übertragen. Der Anschluss kann beispielsweise an der Prozessenergiequelle angeordnet sein, kann aber auch an einem anderen Gerät, welches mit der Prozessenergiequelle in Verbindung steht, vorgesehen sein. Unter den Begriff Anschluss fallen sowohl leitungsgebundene Anschlüsse, wie zum Beispiel Steckverbinder, oder auch drahtlose Schnittstellen oder Verbindungen, wie zum Beispiel Bluetooth® oder andere Funkverbindungen. Dadurch kann einerseits eine optimale Anpassung der jeweiligen Sensoren und bzw. oder Prozessaktoren an den jeweiligen sich periodisch ändernden Prozessparameter erfolgen und es können auch beliebige Sensoren und bzw. oder Prozessaktoren mit der Prozessenergiequelle für bestimmte Zwecke verbunden und in geeigneter Weise mit zumindest einem sich periodisch ändernden Prozessparameter entsprechend synchronisiert werden. Dadurch eröffnen sich auch neue Anwendungsfälle beispielsweise für die Überwachung eines Prozesses mit einem sich periodisch ändernden Prozessparameter. Es können mehrere Sensoren und bzw. oder Prozessaktoren mit gemeinsamen Triggerbedingungen oder jeweils eigenen Triggerbedingungen getriggert werden. Die Benutzerschnittstelle muss nicht gezwungenermaßen von einer Person bedient werden, sondern kann beispielsweise auch durch eine Maschine betätigt werden.

Die Benutzerschnittstelle kann beispielsweise durch ein Webinterface gebildet sein. Beispielsweise kann über ein mit der Prozessenergiequelle verbindbares Notebook eine Website aufgerufen werden, welche die Benutzerschnittstelle zur Festlegung der Triggerbedingung bildet. Dies erlaubt gleichzeitig eine grafische Darstellung zumindest eines sich periodisch ändernden Prozessparameters und eine übersichtliche und einfache Möglichkeit der Festlegung der Triggerbedingungen. Anstelle von Webinterfaces sind auch einfache Bedienelemente und Anzeigen oder Touchscreens an der Prozessenergiequelle oder damit verbundenen Einheiten denkbar.

Ein Sensor kann beispielsweise durch einen optischen Sensor gebildet sein oder einen optischen Sensor beinhalten. Häufig ist die Überwachung von Prozessgrößen mit einem optischen Sensor, beispielsweise einer Kamera, notwendig oder erwünscht, wobei der optische Sensor von zumindest einem sich periodisch ändernden Prozessparameter entsprechend getriggert werden muss. Beispielsweise ist es für die Erzielung einer guten Bildqualität einer Kamera bei einem Lichtbogenschweißverfahren notwendig, die Kameraaufnahmen dann zu machen, während kein Lichtbogen brennt, also beispielsweise in den Kurzschlussphasen eines kurzschlussbehafteten Schweißprozesses.

Ein Sensor kann auch durch einen induktiven oder kapazitiven Sensor gebildet sein oder einen induktiven oder kapazitiven Sensor beinhalten. Mit derartigen Sensoren können auch bestimmte Eigenschaften eines Prozesses beispielsweise zur Qualitätsüberwachung erfasst werden. Dabei ist es ebenfalls notwendig oder zweckmäßig, den induktiven oder kapazitiven Sensor entsprechend zu triggern, um störende Einflüsse des zumindest einen sich periodisch ändernden Prozessparameters auf die zu erfassende Prozessgröße zu minimieren.

Weitere Beispiele für Sensoren sind Distanzsensoren, wie zum Beispiel Lasersysteme zur Abstandsmessung, Strahlungsmesssensoren zur Überwachung eines Lichtbogens, Sensoren für die sogenannte Keyhole-Überwachung (Überwachung des Auftreffpunkts des Lasers) bei Laserbearbeitungsmaschinen, Magnetfeldsensoren, Spannungsmesssensoren mit Leiterschleifen, und viele mehr.

Ein Prozessaktor kann durch einen Manipulator, beispielsweise einen Roboter oder ein Linearfahrwerk, gebildet sein. Derartige Manipulatoren müssen ebenfalls in geeigneter Weise durch den sich periodisch ändernden Prozessparameter angesteuert und getriggert werden.

Ein Prozessaktor kann auch durch einen Motor für den Vorschub von Drähten gebildet sein. Beispielsweise kann der Strom oder die Geschwindigkeit von Motoren für den Vorschub von Schweißdrähten, sogenannten Heißdrähten, getriggert werden.

Andere Beispiele für triggerbare Prozessaktoren sind Ultraschallgeber, Laserquellen, Beleuchtungseinrichtungen und viele mehr.

Gemäß einem weiteren Merkmal der Erfindung ist der Prozessregler zur Veränderung zumindest eines Prozessparameters aufgrund zumindest einer an der Benutzerschnittstelle festgelegten Triggerbedingung ausgebildet. In diesem Fall wirkt sich eine über die Benutzerschnittstelle festgelegte Triggerbedingung auf die Prozessparameter aus. Beispielsweise kann eine bestimmte Triggerbedingung nur bei einer bestimmten Mindestdauer der Periode eines Prozessparameters ausgewählt und festgelegt werden. Ist die Dauer der Periode am Prozessregler unterhalb dieser Mindestdauer eingestellt, kann der Prozessregler über die festgelegte Triggerbedingung sozusagen überstimmt werden und unter Umständen automatisch oder nach erfolgter Bestätigung durch einen Benutzer der Prozess verändert werden. Neben der Beeinflussung zeitlicher Eigenschaften des Prozessparameters können auch andere Eigenschaften, wie Amplitude, Steigungen, oder dgl. des Prozessparameters durch die Triggerbedingung beeinflusst werden.

Wenn der Prozessregler zur Bereitstellung zumindest eines Triggersignals bereits eine voreingestellte Zeitspanne vor der zumindest einen Triggerbedingung und Übertragung über den zumindest einen Anschluss ausgebildet ist, kann ein sogenannter "Pre-Trigger" erzielt werden. Da der Prozessregler Kenntnis über die Periode und den Verlauf des zumindest einen Prozessparameters (zumindest deren Sollwerte) besitzt, kann eine Triggerung der verbundenen Sensoren und bzw. oder Prozessaktoren bereits eine bestimmte voreingestellte Zeit vor dem Triggerzeitpunkt erfolgen. Dadurch kann beispielsweise eine Verzögerung aufgrund von Trägheiten bestimmter Sensoren und bzw. oder Prozessaktoren sowie Übertragungs- oder Signallaufzeiten kompensiert werden. Gemäß einem weiteren Merkmal der Erfindung kann die Zeit, um welche die Triggerung eines verbundenen Sensors oder Prozessaktors vor dem Triggerzeitpunkt getriggert werden soll, auch automatisch festgelegt bzw. eingestellt werden, sobald der Sensor und bzw. oder Prozessaktor mit dem Anschluss verbunden wird. Dies stellt eine Variante einer automatischen Einstellung des Pre-Triggers durch ein Erkennen des mit dem Anschluss verbundenen Sensors und bzw. oder Prozessaktors dar.

Gelöst wird die erfindungsgemäße Aufgabe in verfahrensmäßiger Hinsicht dadurch, dass die zumindest eine Triggerbedingung für die Triggerung des zumindest einen Sensors und bzw. oder des zumindest einen Prozessaktors über eine Benutzerschnittstelle festgelegt und über den zumindest einen Anschluss zumindest ein Triggersignal an den zumindest einen Sensor und bzw. oder den zumindest einen Prozessaktor übertragen werden. Das erfindungsgemäße Verfahren erlaubt eine flexible Festlegung verschiedener Triggerbedingungen für verschiedenste Sensoren und bzw. oder Prozessaktoren unabhängig vom Verlauf des jeweiligen sich periodisch ändernden Prozessparameters. Zu den dadurch erzielbaren Vorteile wird auf die obige Beschreibung der Prozessenergiequelle verwiesen.

Vorteilhafterweise wird der zumindest eine Prozessparameter an der Benutzerschnittstelle grafisch dargestellt und die zumindest eine Triggerbedingung an dem zumindest einen grafisch dargestellten Prozessparameter festgelegt. Dies erlaubt eine einfache und individuelle Festlegung der jeweiligen geeigneten Triggerbedingungen für die verwendeten Sensoren und bzw. oder Prozessaktoren.

Als Triggerbedingungen können beispielsweise Triggerzeitpunkte innerhalb der Periode des zumindest einen sich periodisch ändernden Prozessparameters festgelegt werden. Beispielsweise kann der Nulldurchgang des Prozessparameters als Triggerpunkt definiert werden oder ein Zeitpunkt, welcher eine bestimmte Zeitdauer vor oder nach diesem Nulldurchgang liegt.

Zumindest ein Prozessparameter kann aufgrund zumindest einer an der Benutzerschnittstelle festgelegten Triggerbedingung verändert werden. Dies bezieht sich auf den bereits oben beschriebenen Fall, dass aufgrund einer bestimmten festgelegten Triggerbedingung Einfluss auf den sich periodisch ändernden Prozessparameter genommen werden kann. Beispielsweise kann eine solche Veränderung des Prozessparameters durch den Prozessregler für die Erreichung einer bestimmten Triggerbedingung notwendig sein. Die Einflussnahme der Triggerbedingung auf den Prozessverlauf kann automatisch erfolgen oder nach Bestätigung eines Benutzers vorgenommen werden.

Wenn über den zumindest einen Anschluss zumindest ein Triggersignal um eine voreingestellte Zeitspanne vor der zumindest einen Triggerbedingung übertragen wird, kann ein bereits oben erwähnter "Pre-Trigger" realisiert werden.

Die vorliegende Erfindung wird anhand der beigefügten Zeichnungen näher erläutert. Darin zeigen:
- Fig. 1: ein Blockschaltbild einer Schweißstromquelle als Beispiel einer Prozessenergiequelle zur Bereitstellung eines sich periodisch ändernden Schweißstromes und mit Sensoren zur Erfassung von Prozessgrößen;
- Fig. 2: einen Zeitverlauf eines sich periodisch ändernden Prozessparameters;
- Fig. 3: einen Zeitverlauf eines Schweißstroms mit verschiedenen Triggerbedingungen;
- Fig. 4: ein Triggerzeitpunkt als weiteres Beispiel einer Triggerbedingung;
- Fig. 5: eine Über- oder Unterschreitung einer Triggerschwelle als weiteres Beispiel einer Triggerbedingung; und
- Fig. 6: ein Beispiel eines sogenannten "Pre-Triggers".

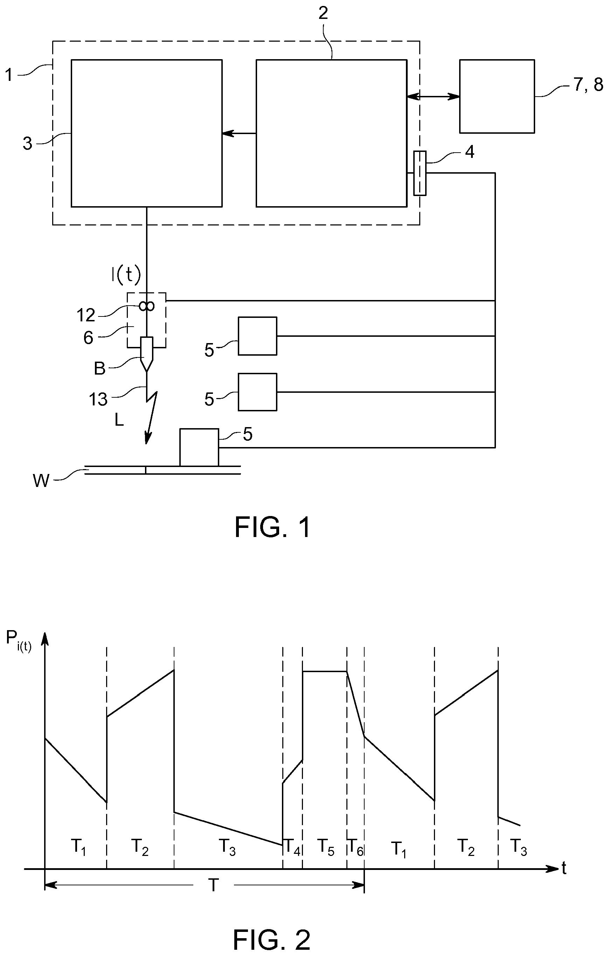

Fig. 1 zeigt ein Blockschaltbild einer Schweißstromquelle als Beispiel einer Prozessenergiequelle 1 zur Bereitstellung zumindest eines sich periodisch ändernden Schweißstromes I(t) als Prozessparameter Pᵢ(t). Die Prozessenergiequelle 1 zur Bereitstellung des sich periodisch ändernden Prozessparameters Pᵢ(t) weist einen Prozessregler 2 auf, der die Periode T des Prozessparameters Pᵢ(t) festlegt. Beispielsweise definiert der Prozessregler 2 einer Schweißstromquelle als Prozessenergiequelle 1 die Dauer einer Kurzschlussphase KS und die Dauer einer Lichtbogenphase LB als Periode T des sich periodisch ändernden Schweißstroms I(t). Durch Eingaben an der Schweißstromquelle (beispielsweise die Auswahl einer sogenannten Schweißkennlinie) wird die Funktion des Prozessreglers 2 definiert. Der Prozessregler 2 kann beispielsweise auch ein Funktionsblock einer Steuerung der Prozessenergiequelle 1 sein. Der Prozessregler 2 kann daher als Software, also nicht physisch ausgestaltet sein oder physisch in Form eines Hardwarebausteins. Über ein Leistungsteil 3 der Prozessenergiequelle 1 wird der jeweilige Prozessparameter Pᵢ(t) an einen Ausgang gelegt, beispielsweise der Schweißstrom I(t) zu einem Schweißbrenner B geführt, sodass ein entsprechender Lichtbogen L zwischen dem Schweißbrenner B und einem zu bearbeitenden Werkstück W gezündet werden kann.

Über einen Anschluss 4, der durch eine drahtgebundene oder drahtlose Schnittstelle gebildet sein kann, werden verschiedene Sensoren 5 und bzw. oder Prozessaktoren 6 mit der Prozessenergiequelle 1 verbunden. Die Sensoren 5 können zur Überwachung des Prozesses und Erfassung bestimmter Prozessgrößen Gⱼ(t) dienen. Verschiedene Prozessaktoren 6 können zur Beeinflussung von Prozessparametern Pᵢ(t) verwendet werden. Die Sensoren 5 und bzw. oder Prozessaktoren 6 können auch mit anderen Einrichtungen, welche mit der Prozessenergiequelle 1 in Verbindung stehen, verbunden werden. Beispielsweise können Kameras als Sensoren 5 auch an einem Roboter, der mit einer Schweißstromquelle in Verbindung steht, angeschlossen werden. Ein Prozessaktor 6 kann beispielsweise durch einen Motor 12 für den Vorschub eines Drahts 13, insbesondere eines Schweißdrahts, gebildet sein.

Erfindungsgemäß ist eine Benutzerschnittstelle 7 vorgesehen, über welche die zumindest eine Triggerbedingung Bₗ für die Triggerung zumindest eines Sensors 5 und bzw. oder zumindest eines Prozessaktors 6 festlegbar ist. Die festgelegte Triggerbedingung Bₗ für den zumindest einen Sensor 5 und bzw. oder den zumindest einen Prozessaktor 6 bzw. ein entsprechendes Triggersignal wird dann entsprechend an den Anschluss 4 übertragen, sodass sichergestellt wird, dass der zumindest eine Sensor 5 und bzw. oder der zumindest eine Prozessaktor 6 entsprechend der festgelegten Triggerbedingungen Bₗ durch den zumindest einen sich periodisch ändernden Prozessparameter Pᵢ(t), also beispielsweise durch den Schweißstrom I(t) getriggert werden. Über den Anschluss 4 erfolgt vorzugsweise ein bidirektionaler Datenaustausch mit dem Sensor 5 und bzw. oder Prozessaktor 6. Die Benutzerschnittstelle 7 kann beispielsweise durch ein Webinterface 8 oder dgl. gebildet sein. Dadurch wird ein bequemes und einfaches Festlegen der Triggerbedingung Bₗ, beispielsweise in grafischer Form, ermöglicht. Die Benutzerschnittstelle 7 kann sowohl manuell durch einen Benutzer als auch automatisch durch eine Maschine bedient werden. Beispielsweise können solche Maschinen durch Sensoren oder Aktoren gebildet sein, welche sich über ihre eigenen optimalen Werte einstellen.

In Fig. 2 ist ein Verlauf eines sich periodisch ändernden Prozessparameters Pᵢ(t) in Abhängigkeit der Zeit t dargestellt. Im dargestellten Beispiel besteht eine Periode T des sich periodisch ändernden Prozessparameters Pᵢ(t) aus sechs verschiedenen Prozessphasen T₁ bis T₆, welche durch einen bestimmten Verlauf des Prozessparameters Pᵢ(t) innerhalb dieser Prozessphasen Tₘ gekennzeichnet sind. Beispielsweise handelt es sich dabei um die Phasen eines Schweißstromes I(t) bei einem Schweißprozess. Die Periode T und auch die innerhalb der Periode T vorliegenden Prozessphasen Tₘ müssen nicht konstant sein, sondern können auch variieren. Der Verlauf des zumindest einen Prozessparameters Pᵢ(t) wird im Prozessregler 2 der Prozessenergiequelle 1 entsprechend den Einstellungen eines Benutzers festgelegt und definiert.

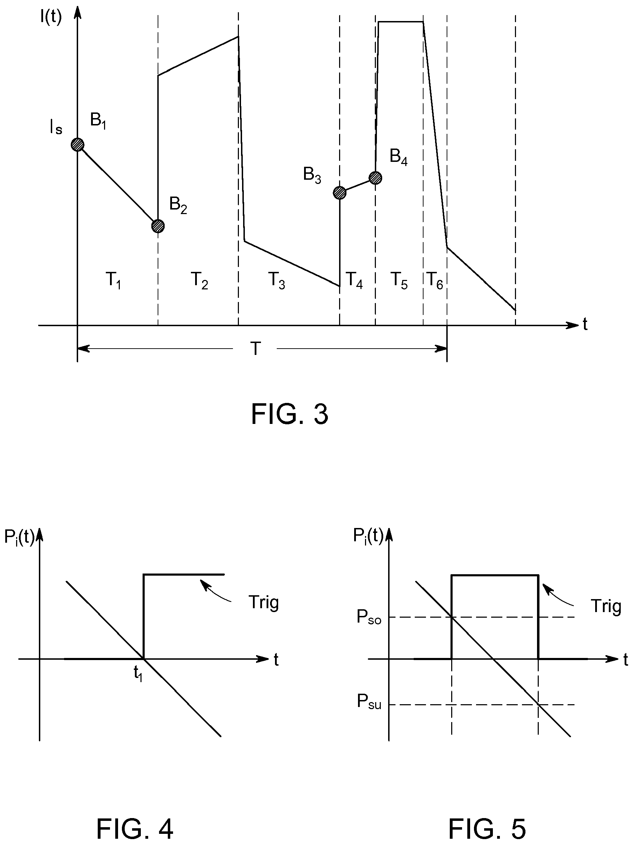

Fig. 3 zeigt den Verlauf des Schweißstroms I(t) in Abhängigkeit der Zeit t. Während einer Periode T des sich periodisch ändernden Schweißstroms I(t) existieren beispielsweise sechs Prozessphasen T₁ bis T₆. Vier verschiedene Triggerbedingungen B₁ bis B₄ sind beispielhaft eingezeichnet. Die Triggerbedingung B₁ ist durch Unterschreitung einer vorgegebenen Schwelle Iₛ des Schweißstroms I(t) festgelegt. Triggerbedingung B₂ ist durch den Beginn einer Pulsstromphase während einer Prozessphase T₂ gekennzeichnet. Die Triggerbedingung B₃ ist durch das Ende des Schweißstromanstiegs I(t) am Ende der Prozessphase T₃ charakterisiert. Schließlich wird die Triggerbedingung B₄ durch einen Anstieg der Steigungsrate des Schweißstroms I(t) am Ende der Prozessphase T₄ gekennzeichnet. Dies stellt nur eine willkürliche Auswahl an möglichen Triggerbedingungen B₁ dar, welche je nach verwendeten und zu triggernden Sensoren 5 und bzw. oder Prozessaktoren 6 entsprechend ausgewählt bzw. festgelegt werden.

In der Schweißtechnik hängen die Triggerbedingungen auch vom jeweiligen Schweißprozess ab. Beim MIG (Metall-Inertgas)- oder MAG (Metall-Aktivgas)-Schweißen können bei Verwendung eines kurzschlussbehafteten Schweißprozesses Beginn und Ende der Kurzschlussphase geeignete Triggerbedingungen darstellen. Bei einem Pulslichtbogenschweißverfahren kann beispielsweise der Beginn und das Ende einer Pulsgrundstromphase als Triggerbedingung gewählt werden. Beim WIG (Wolfram-Inertgas)-Schweißen mit Gleichstrom (DC) und Strompulsen kann ebenfalls der Beginn und das Ende einer Pulsgrundstromphase als Triggerbedingung eingesetzt werden. Beim WIG-Schweißen mit Wechselstrom (AC) kann der Nulldurchgang des Schweißstroms (Wechsel von negativem Schweißstrom zu positivem Schweißstrom und umgekehrt) als Triggerbedingung herangezogen werden.

Beispielsweise kann ein optischer Sensor 5 zur Aufnahme einer Schweißnaht während eines Schweißprozesses mit dem Beginn einer Kurzschlussphase getriggert werden, sodass nur während der Kurzschlussphase, in der kein Lichtbogen L brennt, ein Signal geliefert wird und keine Störung des Sensorsignals durch den Lichtbogen L stattfindet. Die über die Benutzerschnittstelle 7 entsprechend festgelegte Triggerbedingung B₁ definiert das Triggersignal Trig, welches über den Anschluss 4 übertragen und an den Sensor 5 und bzw. oder Prozessaktor 6 geleitet wird. Die Benutzerschnittstelle 7 kann beispielsweise durch ein Webinterface 8 gebildet sein. Dabei kann ein Benutzer mit Hilfe eines Notebooks eine bestimmte Website öffnen und darüber die Triggerbedingungen B₁ für einen gewünschten Sensor 5 zur Erfassung einer bestimmten Prozessgröße Gⱼ(t) oder einen Prozessaktor 6 zur Beeinflussung eines Prozessparameters Pᵢ(t) festlegen. Während des Prozesses werden dann entsprechende Triggersignale gemäß den festgelegten Triggerbedingungen über den Anschluss 4 an den Sensor und bzw. oder Prozessaktor 6 übertragen.

Anstelle einer manuellen Festlegung der Triggerbedingungen B₁ durch einen Benutzer über die Benutzerschnittstelle 7 sind auch automatische Festlegungen der Triggerbedingungen Bₗ über die Benutzerschnittstelle 7 denkbar. Beispielsweise kann beim Anschließen oder Verbinden eines bestimmten Sensors 5 an die Prozessenergiequelle 1 auch automatisch eine für diesen Sensor 5 geeignete Triggerbedingung Bₗ in der Benutzerschnittstelle 7 festgelegt werden.

Wenn eine bestimmte Triggerbedingung Bₗ ausgewählt wird, welche nur mit einem speziellen Verlauf eines Prozessparameters Pᵢ(t) erzielbar ist, kann auch eine Veränderung des zumindest einen Prozessparameters Pᵢ(t) aufgrund der festgelegten Triggerbedingung Bₗ stattfinden. In diesem Fall hat also eine festgelegte Triggerbedingung Bₗ Einfluss auf den Prozessregler 2 der Prozessenergiequelle 1. Beispielsweise können zeitliche Eigenschaften eines Prozessparameters Pᵢ(t) oder auch die Amplitude oder der Anstieg eines Prozessparameters Pᵢ(t) aufgrund der Triggerbedingung Bₗ verändert werden.

Fig. 4 zeigt den Verlauf eines Prozessparameters Pᵢ(t) in Abhängigkeit der Zeit t. Als Triggerbedingung ist der Nulldurchgang des Prozessparameters Pᵢ(t) festgelegt. Sobald die Triggerbedingung erfüllt ist, also der Prozessparameter Pᵢ(t) zum Zeitpunkt t₁ die Zeitachse t kreuzt, wird der Trigger ausgelöst und ein entsprechendes Triggersignal Trig über den Anschluss 4 übertragen.

Fig. 5 zeigt den Verlauf eines Prozessparameters Pᵢ(t) in Abhängigkeit der Zeit t bei weiteren Triggerbedingungen. Als Triggerbedingungen sind beispielsweise die Über- oder Unterschreitung einer oberen Schwelle Pₛₒ des Prozessparameters Pᵢ(t) und die Über- oder Unterschreitung eines unteren Schwellwerts Pₛᵤ des Prozessparameters Pᵢ(t) festgelegt. Sobald die erste Triggerbedingung, im dargestellten Ausführungsbeispiel die Unterschreitung der oberen Schwelle Pₛₒ des Prozessparameters Pᵢ(t) stattfindet, wird der Trigger ausgelöst bzw. das Triggersignal Trig eingeschaltet. Nach Erfüllung der zweiten Triggerbedingung, im dargestellten Ausführungsbeispiel die Unterschreitung des unteren Schwellwerts Pₛᵤ des Prozessparameters Pᵢ(t) wird der Trigger deaktiviert bzw. das Triggersignal Trig wieder abgeschaltet.

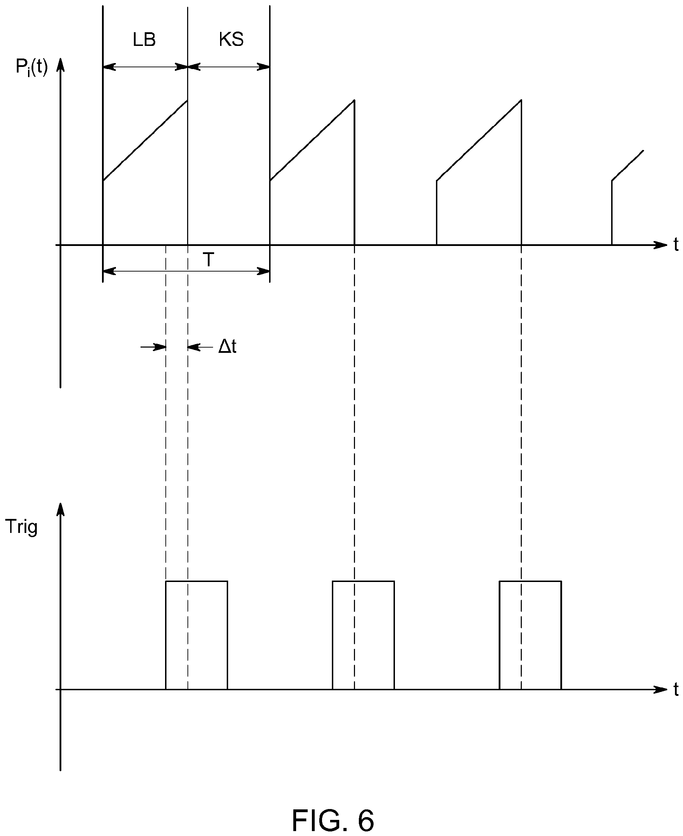

Schließlich zeigt Fig. 6 noch das Beispiel eines sogenannten "Pre-Triggers". Im oberen Diagramm ist ein sich periodisch ändernder Prozessparameter Pᵢ(t) in Abhängigkeit der Zeit t dargestellt. Es handelt sich beispielsweise um den Schweißstrom I(t) als Prozessparameter Pᵢ(t), der während einer Periode T eine Lichtbogenphase LB und eine Kurzschlussphase KS durchläuft. Als Triggerbedingung Bₗ wird eine voreingestellte Zeitspanne Δt vor Beginn der Kurzschlussphase KS festgelegt. Der Trigger bzw. das Triggersignal Trig (unteres Diagramm) wird also um diese voreingestellte Zeitspanne Δt vor Beginn der Kurzschlussphase KS aktiviert und beispielsweise nach Ablauf einer bestimmten Dauer wieder deaktiviert. Dadurch können beispielsweise Verzögerungen von Sensoren 5 oder Prozessaktoren 6 sowie Signallaufzeiten ausgeglichen oder kompensiert werden. Die Zeitspanne Δt kann auch in einem Sensor 5 oder Prozessaktor 6 hinterlegt sein und automatisch bei der Verwendung des Sensors 5 oder Prozessaktors 6 eingestellt werden. Wie bereits oben kurz erwähnt, kann der Sensor 5 und bzw. oder Prozessaktor 6 auch automatisch erkannt werden, sobald er mit dem Anschluss 4 verbunden wird und eine entsprechende Zeitspanne Δt, die zu diesem Sensor 5 und bzw. oder Prozessaktor 6 hinterlegt ist, automatisch als Wert für den Pre-Trigger eingestellt werden. Damit wird der jeweils angeschlossene Sensor 5 und bzw. oder Prozessaktor 6 automatisch mit einem hinterlegten Wert für die Zeitspanne Δt vor (oder auch nach) dem Triggerzeitpunkt getriggert.

Die vorliegende Erfindung ermöglicht eine besonders flexible Festlegung von Triggerbedingungen Bₗ an einer Benutzerschnittstelle 7 einer Prozessenergiequelle 1.

## Patentansprüche

1. Prozessenergiequelle (1) zur Bereitstellung zumindest eines sich mit einer Periode (T) periodisch ändernden Prozessparameters (Pᵢ(t)), insbesondere Schweißstromquelle zur Bereitstellung eines Schweißstromes (I(t)), mit einem Prozessregler (2) zur Festlegung der Periode (T) des zumindest einen Prozessparameters (Pᵢ(t)), einem Leistungsteil (3) und zumindest einem Anschluss (4) zur Verbindung mit zumindest einem Sensor (5) zur Erfassung von Prozessgrößen (Gⱼ(t)) und bzw. oder zumindest einem Prozessaktor (6) zur Beeinflussung von Prozessparametern (Pᵢ(t)), wobei der zumindest eine Sensor (5) und bzw. oder der zumindest eine Prozessaktor (6) durch den sich periodisch ändernden Prozessparameter (Pᵢ(t)) nach zumindest einer vorgegebenen Triggerbedingung (Bₗ) triggerbar ist, **dadurch gekennzeichnet, dass** eine Benutzerschnittstelle (7) vorgesehen ist, über welche die zumindest eine Triggerbedingung (Bₗ) für die Triggerung des zumindest einen Sensors (5) und bzw. oder des zumindest einen Prozessaktors (6) festlegbar und über den zumindest einen Anschluss (4) an den zumindest einen Sensor (5) und bzw. oder den zumindest einen Prozessaktor (6) zumindest ein Triggersignal (Trig) übertragbar ist.

2. Prozessenergiequelle (1) nach Anspruch 1, **dadurch gekennzeichnet, dass** die Benutzerschnittstelle (7) durch ein Webinterface (8) gebildet ist.

3. Prozessenergiequelle (1) nach Anspruch 1 oder 2, **dadurch gekennzeichnet, dass** ein Sensor (5) durch einen optischen Sensor (9) gebildet ist oder einen optischen Sensor (9) beinhaltet.

4. Prozessenergiequelle (1) nach einem der Ansprüche 1 bis 3, **dadurch gekennzeichnet, dass** ein Sensor (5) durch einen induktiven oder kapazitiven Sensor (10) gebildet ist oder einen induktiven oder kapazitiven Sensor (10) beinhaltet.

5. Prozessenergiequelle (1) nach einem der Ansprüche 1 bis 4, **dadurch gekennzeichnet, dass** ein Prozessaktor (6) durch einen Manipulator (11), beispielsweise einen Roboter oder ein Linearfahrwerk, gebildet ist.

6. Prozessenergiequelle (1) nach einem der Ansprüche 1 bis 5, **dadurch gekennzeichnet, dass** ein Prozessaktor (6) durch einen Motor (12) für den Vorschub von Drähten (13) gebildet ist.

7. Prozessenergiequelle (1) nach einem der Ansprüche 1 bis 6, **dadurch gekennzeichnet, dass** der Prozessregler (2) zur Veränderung zumindest eines Prozessparameters (Pᵢ(t)) aufgrund zumindest einer an der Benutzerschnittstelle (7) festgelegten Triggerbedingung (Bₗ) ausgebildet ist.

8. Prozessenergiequelle (1) nach einem der Ansprüche 1 bis 7, **dadurch gekennzeichnet, dass** der Prozessregler (2) zur Bereitstellung zumindest eines Triggersignals (Trig) eine voreingestellte Zeitspanne (Δt) vor der zumindest einen Triggerbedingung (Bₗ) und Übertragung über den zumindest einen Anschluss (4) ausgebildet ist.

9. Verfahren, insbesondere Schweißverfahren, bei dem in einer Prozessenergiequelle (1) zumindest ein Prozessparameter (Pᵢ(t)) mit einer Periode (T) periodisch geändert wird, wobei mit einem Prozessregler (2) die Periode (T) des zumindest einen Prozessparameters (Pᵢ(t)) festgelegt wird, und von einem Leistungsteil (3) der zumindest eine Prozessparameter (Pᵢ(t)) erzeugt wird, und über zumindest einen Anschluss (4) zumindest ein Sensor (5) zur Erfassung von Prozessgrößen (Gᵢⱼ(t)) und bzw. oder zumindest ein Prozessaktor (6) zum Beeinflussen von Prozessparametern (Pᵢ(t)) verbunden wird, wobei der zumindest eine Sensor (5) und bzw. oder der zumindest eine Prozessaktor (6) durch den zumindest einen sich periodisch ändernden Prozessparameter (Pᵢ(t)) nach zumindest einer vorgegebenen Triggerbedingung (Bₗ) getriggert wird, **dadurch gekennzeichnet, dass** die zumindest eine Triggerbedingung (Bₗ) für die Triggerung des zumindest einen Sensors (5) und bzw. oder des zumindest einen Prozessaktors (6) über eine Benutzerschnittstelle (7) festgelegt und über den zumindest einen Anschluss (4) zumindest ein Triggersignal (Trig) an den zumindest einen Sensor (5) und bzw. oder den zumindest einen Prozessaktor (6) übertragen wird.

10. Verfahren nach Anspruch 9, **dadurch gekennzeichnet, dass** der zumindest eine Prozessparameter (Pᵢ(t)) an der Benutzerschnittstelle (7) grafisch dargestellt wird und die zumindest eine Triggerbedingung (Bₗ) an dem zumindest einen grafisch dargestellten Prozessparameter (Pᵢ(t)) festgelegt wird.

11. Verfahren nach Anspruch 9 oder 10, **dadurch gekennzeichnet, dass** als Triggerbedingung (Bₗ) Triggerzeitpunkte (tₗ) innerhalb der Periode (T) festgelegt werden.

12. Verfahren nach einem der Ansprüche 9 bis 11, **dadurch gekennzeichnet, dass** zumindest ein Prozessparameter (Pᵢ(t)) aufgrund zumindest einer an der Benutzerschnittstelle (7) festgelegten Triggerbedingung (Bₗ) verändert wird.

13. Verfahren nach einem der Ansprüche 9 bis 12, **dadurch gekennzeichnet, dass** über den zumindest einen Anschluss (4) zumindest ein Triggersignal (Trig) um eine voreingestellte Zeitspanne (Δt) vor der zumindest einen Triggerbedingung (Bₗ) übertragen wird.
